**Europäisches Patentamt**

**European Patent Office**

**Office européen des brevets**

(19)

(11) Veröffentlichungsnummer: **0 006 498**
**B1**

(12) # EUROPÄISCHE PATENTSCHRIFT

(45) Veröffentlichungstag der Patentschrift:
17.04.85

(51) Int. Cl.⁴: **G 07 C 11/00**

(21) Anmeldenummer: **79101809.6**

(22) Anmeldetag: **07.06.79**

(54) **Verfahren und Einrichtung zur Absicherung von Dokumenten.**

(30) Priorität: **16.06.78 DE 2826469**

(43) Veröffentlichungstag der Anmeldung:
**09.01.80 Patentblatt 80/1**

(45) Bekanntmachung des Hinweises auf die Patenterteilung:
**17.04.85 Patentblatt 85/16**

(84) Benannte Vertragsstaaten:
**AT BE CH DE FR GB IT LU NL SE**

(73) Patentinhaber: **The Grey Lab. Establishment,
Kirchstrasse 1, 9490 Vaduz (LI)**

(72) Erfinder: **Scheffel, Kurt, Breslauer Strasse 1,
D-7858 Weil am Rhein (DE)**

(74) Vertreter: **Schwan, Gerhard, Dipl.-Ing. et al,
Elfenstrasse 32, D-8000 München 83 (DE)**

(56) Entgegenhaltungen:
DE - A - 2 231 242
FR - A - 2 246 913
US - A - 3 665 162
US - A - 3 740 530
US - A - 3 869 700
US - A - 4 048 475
US - A - 4 094 462

IEEE TRANSACTIONS ON INFORMATION THEORY, vol.
IT-22, no. 6, November 1976, New York, USA, W. DIFFIE
und M.E. HELLMAN: "New directions in cryptography",
Seiten 644-653
IBM TECHNICAL DISCLOSURE BULLETIN, vol. 16, no.
12, May 1974, New York, USA, M. PRUDHOMME:
"Personal identification number checking algorithm,
Seite 3977

(56) Entgegenhaltungen: (Fortsetzung)
MIT/LCS/TM-82, April 1977, R. RIVEST et al., "A method
for obtaining digital signatures and public-key
cryptosystems"
Conference Record 1978 National Telecommunications
Conference, vol. 2 (IEEE Catalog no. 78CH1354-0CSCB)
Dec. 3-6, 1978 Birmingham, Alabama (US) L.M.
ADLEMAN und R.L. RIVEST: "The use of public key
cryptography in communications system design", Seiten
26.4.1 - 26.4.4.

Anmerkung Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft ein Verfahren zur Erzeugung und späteren Kontrolle von gegen Nachahmung, Verfälschung und Mißbrauch abgesicherten Dokumenten, bei dem bei dessen Erstellung auf dem abzusichernden Dokument eine unverschlüsselte Klarinformation maschinenlesbar eingetragen wird, aus der unverschlüsselten Klarinformation unter Verwendung eines geheimgehaltenen Algorithmus oder eines diesem zugeordneten geheimen Schlüssels eine verschlüsselte Information abgeleitet wird, die ebenfalls maschinenlesbar auf dem abzusichernden Dokument eingetragen wird, und bei dessen Kontrolle eine der beiden auf dem Dokument befindlichen Informationen über einen Algorithmus oder diesem zugeordneten Schlüssel verändert und mit der anderen Information verglichen wird, und das Vergleichsergebnis die Gültigkeit des Dokuments kenntlich macht. Die Erfindung betrifft des weiteren eine Einrichtung zur Durchführung eines solchen Verfahrens.

In zunehmendem Maße wird es erforderlich, Ausweiskarten, Paßkarten, Führerscheine oder ähnliche Dokumente statt wie bisher nur visuell nunmehr auch automatisch zu kontrollieren, insbesondere um die Abfertigung an Massenverkehrspunkten, wie Flughäfen und Grenzübergängen, zu beschleunigen, aber auch um die in den Ausweisen enthaltenen Informationen automatisch an eine Stelle übermitteln zu können, wo sie mit entsprechenden Listen verglichen werden können. Darüber hinaus erscheint es nützlich, die Prüfung der Echtheit oder Unversehrtheit eines Ausweises, die bisher nur durch den Menschen erfolgt, durch eine automatische (maschinelle) Prüfung zu unterstützen.

Der durch automatisch arbeitende Verfahren und Geräte durchgeführten Absicherung von Ausweisdokumenten kommen verschiedene Aufgaben zu. Besonders wichtig ist die Absicherung gegen von Fälschern hergestellte Dokumente. Bei dem heutigen Stand der Fälschungstechnik erscheint eine maschinelle Kontrolle des Dokumentes auf Echtheit unerläßlich, zumal die visuelle Kontrolle auch darunter leidet, daß die Schulung der Kontrollbeamten immer schwieriger wird. Unbedingt erforderlich wird eine automatische Echtheitskontrolle dann, wenn z. B. in Ballungszentren des Reiseverkehrs, auf eine visuelle Kontrolle ganz verzichtet werden muß, um die Abfertigung zu beschleunigen.

Es ist bekannt, Ausweisdokumente mit einer maschinenlesbaren Schrift, z. B. einer OCR-Schrift, die optisch gelesen werden kann, einer MCR-Schrift, die magnetisch und visuell gelesen werden kann, einer optisch oder magnetisch automatisch lesbaren Balkenschrift oder einem entsprechend codierten Magnetstreifen zu versehen. Es ist auch bekannt, solche maschinenlesbaren Zeichen zur Eintragung verschlüsselter Informationen zu verwenden, die mit anderen Informationen des Ausweisdokumentes über einen Algorithmus zusammhängen. Eine derartige Verschlüsselung bietet für die Herstellung von falschen Ausweisdokumenten kein wesentliches Hindernis. Die Einrichtungen, mit denen die verschlüsselte Information mit der unverschlüsselten Information verglichen wird, um die Echtheit und die Unversehrtheit der Ausweisdokumente zu prüfen, müssen an vielen Stellen, z. B. bei Polizeistationen oder Grenzübergängen vorhanden sein und sind daher einem räuberischen Zugriff offen. Aus diesen Einrichtungen läßt sich der verwendete Algorithmus ableiten, auch wenn er vorher geheimgehalten wurde.

Darüber hinaus ist es mit modernen Methoden der Dechiffriertechnik möglich, den Algorithmus aus einer größeren Anzahl von Ausweisdokumenten verschiedenen Inhaltes zu ermitteln.

Weiterhin ist vorgeschlagen worden, Ausweisdokumente so zu gestalten, daß eine Änderung der auf ihnen eingetragenen Information als ganze oder teilweise Zerstörung des Dokumentes sichtbar wird. Die bisher bekannten Verfahren scheinen zwar im visuellen Bereich brauchbar zu sein, die meisten von ihnen scheiden aber für eine automatische Kontrolle aus.

Zur Absicherung gegen Verluste oder Diebstahl von Ausweisdokumenten hat man auch bereits eine persönliche Identifikationsnummer, abgekürzt »PIN«, verwendet (US-A-3 665 162). Die PIN ist eine Zahl oder ein anderer Merkbegriff, die nur dem rechtmäßigen Inhaber des Ausweisdokumentes bekannt sein soll und die er während der automatischen Kontrolle des Ausweisdokumentes in eine Tastatur oder dergleichen eingibt. Die PIN ist im Ausweisdokument über einem Algorithmus verschlüsselt maschinell lesbar enthalten, so daß die Kontrolleinrichtung einen Vergleich der beiden Eingaben durchführen kann. Auch die PIN bietet aber keinen eindeutigen Schutz, da der Algorithmus zu ihrer Verschlüsselung und damit die PIN selbst dem Fälscher auf einem der obengenannten Wege bekannt werden kann.

Man hat ferner vorgeschlagen, für den Aufbau von Ausweisdokumenten Materialien zu verwenden, die dem Fälscher nicht zugänglich sind, wie z. B. radioaktive Materialien, die einer staatlichen Kontrolle unterliegen, und diese Materialien in einer entsprechenden Kontrollapparatur feststellen zu lassen. Wenn es wirklich gelingt, diese Materialien unter Kontrolle zu halten oder geheimzuhalten, so ist damit ein Schutz gegen die Nachahmung von Ausweisdokumenten möglich. Ein Schutz gegen die Veränderung der auf den Ausweisdokumenten enthaltenen Information ergibt sich durch diese Methode jedoch nicht. Außerdem erscheint die Monopolisierung der Herstellung und Verwendung solcher Materialien schwierig, da bei ihrer Herstellung und Verwendung zwangsweise eine größere Anzahl von Personen beschäftigt sein muß und dadurch ein Diebstahl solcher Materialien nicht zu verhindern ist bzw. bei geheimzuhaltenden Materialien der Verrat der Geheimnisse nicht auszuschließen ist.

Schließlich ist ein Verfahren der eingangs genannten Art bekannt (FR-A-2 246 913), bei dem zur Sicherung des Dokuments eine unverschlüsselte Information mit einem geheimen Schlüssel verschlüsselt wird und sowohl die unverschlüsselte Information als auch die verschlüsselte Information maschinenlesbar auf dem Dokument eingetragen werden. Bei der Kontrolle des Dokuments wird die aus dem Dokument herausgelesene unverschlüsselte Information mit dem gleichen geheimen Schlüssel, wie er bei der Erstellung des Dokuments benutzt worden war, verschlüsselt. Das heißt, die Verschlüsselung der Information wird auf der Kontrollseite wiederholt. Die so erhaltene zweite verschlüsselte Information wird mit der aus dem Dokument herausgelesenen ursprünglich verschlüsselten Information verglichen, um die Gültigkeit des Dokuments kenntlich zu machen. Bei diesem Verfahren stört, daß sowohl bei der Erstellung als auch bei der Kontrolle der gleiche Geheimschlüssel verwendet wird, der somit an viele Kontrollstationen abgegeben werden muß.

Der Erfindung liegt die Aufgabe zurunde, das bekannten Verfahren so abzuändern, daß die Fälschsicherheit erhöht wird. Diese Aufgabe wird erfindungsgemäß gelöst durch die Verwendung eines über eine »trap-door« Funktion verbundenen Schlüssel- oder Algorithmuspaares, bestehend aus einem geheimhaltungsbedürftigen Schlüssel und einem nichtgeheimhaltungsbedürftigen Schlüssel, wobei

— bei der Erstellung des Dokuments der geheimhaltungsbedürftige Schlüssel bzw. Algorithmus zur Verschlüsselung der Information und
— bei der Kontrolle des Dokuments der nichtgeheimhaltungsbedürftige Schlüssel bzw. Algorithmus zur Entschlüsselung der verschlüsselten Information eingesetzt wird und die so gewonnene Information mit der auf dem Dokument befindlichen unverschlüsselten Information verglichen wird.

Bei dem Verfahren nach der Erfindung wird also die entschlüsselte Information mit der auf dem Dokument befindlichen unverschlüsselten Information verglichen, wobei auf der Kontrollseite nur ein nichtgeheimhaltungsbedürftiger Schlüssel bzw. Algorithmus erforderlich ist. Die Kenntnis dieses Schlüssels reicht für eine Fälschung nicht aus. Der geheimhaltungsbedürftige Schlüssel wird dagegen nur bei der Erstellung des Dokuments benötigt, d. h. an einer Stelle, die als Dokumentenausgabezentrale besonders gut gesichert werden kann.

Zwar ist es bekannt (Aufsatz »A METHOD FOR OBTAINING DIGITAL SIGNATURES AND PUBLIC-KEY CRYPTOSYSTEMS« von Rivest, Shamir und Adleman in der Druckschrift MIT/LCS/TM-82, April 1977), Informationen mittels »trap-door«-Schlüsseln zu schützen, doch wird dabei für die Sicherung gegen Fälschung die Verwendung von zwei Schlüsselpaaren (sogenanntes »Public-Key Cryptosystem«) vorgeschlagen, also ein von dem Verfahren nach der Erfindung abweichender Weg.

In weiterer Ausgestaltung der Erfindung kann bei der Erstellung des abgesicherten Dokuments eine im voraus auf das noch ungesicherte Dokument unverschlüsselt aufgebrachte Information ausgelesen, verschlüsselt und zusammen mit dem nichtgeheimhaltungsbedürftigen Schlüssel des bei der späteren Kontrolle des Dokuments zu verwendenden Algorithmus auf dem Dokument eingetragen werden. In einem solchen Fall wird der bei der Informationseintragung verwendete geheimzuhaltende Algorithmus bzw. der diesem zugeordnete geheime Schlüssel später nicht mehr gebraucht. Er kann vollkommen vergessen werden.

Durch die Einbeziehung von zur Personalisierung des Dokuments eingetragenen Informationen in die Verschlüsselung läßt sich verhindern, daß mit gestohlenen, noch nicht personalisierten Ausweisdokumenten Mißbrauch getrieben wird, wie es z. B. mit gestohlenen Paßformularen heute geschieht, indem diese nachträglich durch den Fälscher mit allen Personalisierungsdaten wie auch einem Foto versehen werden.

Eine Einrichtung zur Erzeugung von abgesicherten Dokumenten ist erfindungsgemäß gekennzeichnet durch einen Schlüsselzahlgeber für mindestens ein Paar von über eine »trap-door«-Funktion verbundenen Schlüsselzahlen, einen Dokumentenleser zum maschinellen Lesen von unverschlüsselten Klarinformationen auf dem Dokument, einen Algorithmusrechner zur Verschlüsselung der auf dem Dokument gelesenen Information mit der geheimgehaltenen Schlüsselzahl und einem Dokumentenschreiber zum Eintragen der für die Entschlüsselung notwendigen nichtgeheimhaltungsbedürftigen Schlüsselzahl und der verschlüsselten Information auf dem Dokument.

Eine Einrichtung zur Kontrolle von abgesicherten Dokumenten weist erfindungsgemäß einen Dokumentenleser zum maschinellen Lesen der unverschlüsselten Information, einen Dokumentenleser zum maschinellen Lesen der zur Entschlüsselung notwendigen, nichtgeheimhaltungsbedürftigen Schlüsselzahl und der verschlüsselten Information, einen Algorithmusrechner zur Entschlüsselung der verschlüsselten Information unter Verwendung der gelesenen nichtgeheimhaltungsbedürftigen Schlüsselzahl und einen Vergleicher für die gelesene unverschlüsselte und die so gewonnene entschlüsselte Information auf.

Weitere Merkmale der Erfindung ergeben sich aus den Unteransprüchen. Die Erfindung ist im folgenden anhand von bevorzugten Ausführungsbeispielen in Verbindung mit den Zeichnungen näher erläutert. Es zeigt

Fig. 1 eine Einrichtung zur Absicherung von Dokumenten,

Fig. 2 eine Einrichtung zur Kontrolle abgesicherter Dokumente,

Fig. 3 eine Einrichtung zur Personalisierung und Absicherung von Dokumenten unter Einbeziehung einer persönlichen Identifikationsnummer,

Fig. 4 eine Einrichtung zur Kontrolle von abgesicherten Dokumenten mit persönlicher Identifikationsnummer,

Fig. 5 eine Einrichtung zur Personalisierung und Absicherung von Dokumenten unter Einbeziehung der Codewort- und Klangerkennung,

Fig. 6 eine Einrichtung zur Kontrolle abgesicherter Dokumente unter Einbeziehung der Codewort- und Klangerkennung,

Fig. 7 einen Abtastraster für eine bildliche Darstellung und

Fig. 8 eine Schaltungsanordnung zur Erzeugung eines vorgegebenen Verhältnisses der Anzahlen von hellen und dunklen Rasterpunkten.

Jede Chiffrierung beruht darauf, die zu chiffrierende Information K durch Anwendung eines Algorithmus A in die chiffrierte Information C zu verwandeln.

$$C = A (K) \qquad (1)$$

Nach Übermittlung der chiffrierten Information C dechiffriert der Empfänger diese chiffrierte Information durch Anwendung eines Algorithmus B und erhält die dechiffrierte Information K.

$$K = B (C) \qquad (2)$$

Die Algorithmen A und B beinhalten in modernen Chiffrierverfahren meist zwei Bestandteile, nämlich ein Rechenverfahren und eine Schlüsselinformation. So besteht z. B. ein bekanntes Verfahren zur Verschlüsselung und Entschlüsselung von Informationen auf Fernschreibleitungen darin, daß auf der Sendeseite zu der zu verschlüsselnden Information Bit für Bit stochastische Information addiert und die gleiche Information auf der Empfangsseite wieder Bit für Bit subtrahiert wird. Hier erhält der Algorithmus A das Additionsverfahren, der Algorithmus B das Subtraktionsverfahren, und die Schlüsselinformation besteht in der an beiden Stellen gleichen stochastischen Bitfolge.

Wie in diesem Fall, so ist es in den meisten Chiffrier- und Dechiffrierverfahren möglich, die in den Algorithmen enthaltenen Rechenverfahren bekanntzugeben und zur Sicherung der übertragenen chiffrierten Nachrichten nur die Schlüsselinformation geheimzuhalten.

Alle bis vor wenigen Jahren angewendeten Verschlüsselungsverfahren haben aber die Eigenschaft, daß die Algorithmen A und B bzw. bei nicht geheimgehaltenen Rechenverfahren die zu A und B gehörenden Schlüsselinformationen auseinander ableitbar sind. In dem oben beschriebenen Fall der Fernschreibverschlüsselung müssen die Schlüsselinformationen sogar exakt gleich sein.

In Verbindung mit dem Transport von geheimzuhaltenden Nachrichten über Leitungen sind in den letzten Jahren Algorithmen bekanntgeworden, für die das nicht mehr zutrifft. Obwohl diese Algorithmen die in den Gleichungen (1) und (2) dargestellte Eigenschaft, nämlich bei aufeinanderfolgender Anwendung die ursprüngliche Information wiederherzustellen, besitzen, ist es doch unmöglich, aus dem Algorithmus A den Algorithmus B abzuleiten, selbst dann nicht, wenn außer dem Algorithmus A eine größere Zahl von unverschlüsselten Informationen K und zugehörigen, verschlüsselten Informationen C gegeben sind. Derartige Algorithmen werden in der amerikanischen Literatur »trap-door«-Funktionen genannt.

Auch für die Verschlüsselung auf der Basis der trap-door-Funktionen gilt die Möglichkeit der Zerlegung in die beiden Bestandteile: Rechenverfahren und Schlüsselinformation. Auch bei ihnen kann das Rechenverfahren bekanntgemacht werden. Die trap-door-Eigenschaft bleibt auch dann erhalten, wenn nur die Schlüsselinformation des Algorithmus B geheimgehalten wird.

Das Verfahren und die Einrichtung nach der Erfindung nutzen die Eigenschaften der trap-door-Funktionen für den Schutz von Dokumenten.

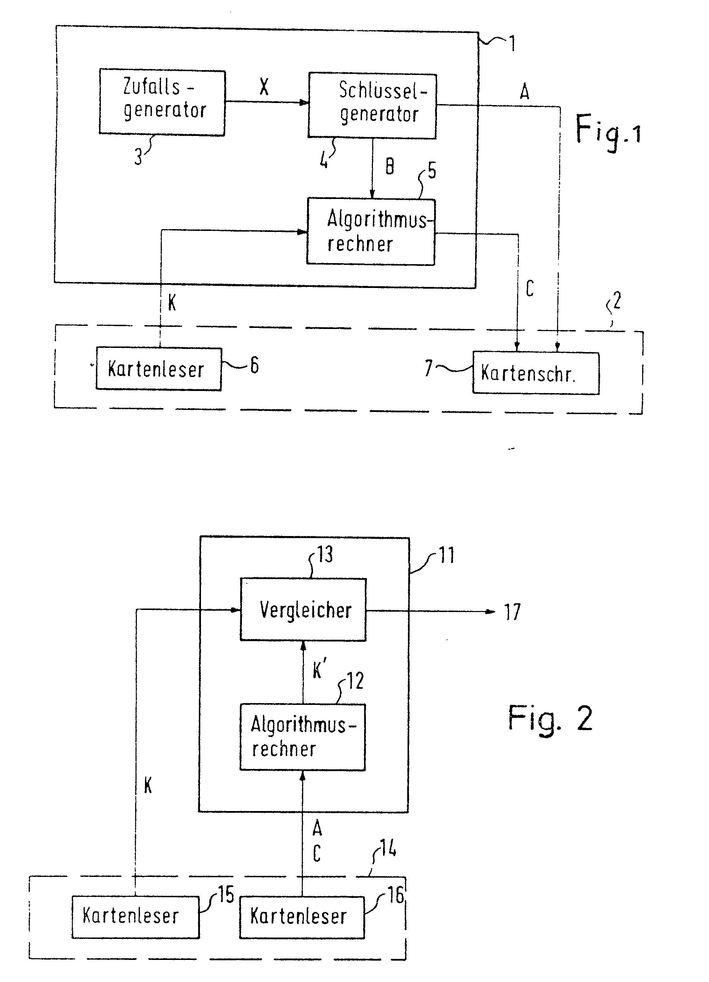

Fig. 1 zeigt ein Gerät wie es z. B. in einer Paßbehörde zur Absicherung von Paßkarten verwendet werden kann. Es wird zur Erhöhung der Anschaulichkeit in einem Teil der Beschreibung von »Karten« gesprochen. Alle beschriebenen Verfahren und Einrichtungen lassen sich aber auf andere Dokumente übertragen. Ein Codierrechner 1 ist mit einem Kartenleser/-schreiber 2 verbunden. Der Codierrechner 1 enthält einen Zufallsgenerator 3, einen Schlüsselgenerator 4 und einen Algorithmusrechner 5.

Der Kartenleser/-schreiber besteht aus einem Kartenleser 6, der von der ungesicherten Karte eine Information liest und einem Kartenschreiber 7, der auf die Karte die zur Absicherung dienende Information aufschreibt.

Die beschriebene Einrichtung arbeitet folgendermaßen: Bei der Einführung einer Karte in den Kartenleser 6 wird der Zufallsgenerator 3 in Betrieb gesetzt; er liefert eine Zufallszahl X. Diese Zufallszahl wird im Schlüsselgenerator 4 in zwei Schlüsselzahlen A und B umgerechnet. Der Schlüsselgenerator 4 ist in seinem Aufbau und/oder seiner Programmierung für die Herstellung von Schlüsselzahlen eingerichtet, die die trap-door-Eigenschaft besitzen. Das bedeutet, daß die Schlüsselzahl B sich nicht mit vertretbarem Aufwand aus der Schlüsselzahl A errechnen läßt.

Solche Rechenverfahren sind an sich bekannt und in der Literatur beschrieben. Der Aufbau und/oder die Programmierung eines Rechners, der als Schlüsselgenerator 4 verwendet werden kann, sind daher für den Fachmann möglich.

Die von der ungesicherten Karte über den Kartenleser 6 abgelesene Information K wird dem Algorithmusrechner 5 zugeführt, der mit einem nicht notwendig geheim gehaltenen Rechenverfahren, aber mit der geheimgehaltenen Schlüsselzahl B hieraus die verschlüsselte Information C nach folgender Gleichung herstellt:

$$C = B (K) \qquad (3)$$

Dieser verschlüsselten Information wird die vom Schlüsselgenerator 4 erzeugte Schlüsselzahl A vorangestellt; beide Informationen werden mit Hilfe des Kartenschreibers 7 auf die Karte geschrieben.

Die Einrahmung der zum Codierrechner 1 gehörenden Einrichtungteile soll andeuten, daß diese Geräte vor Zugriff gesichert sind.

Die Einrahmung der zum Kartenleser/-schreiber 2 gehörenden Einrichtungteile soll dagegen andeuten, daß Kartenleser 6 und Kartenschreiber 7 mechanisch oder auf andere Weise so miteinander verbunden sind, daß die vom Codierrechner 1 erzeugte Information mittels des Kartenschreibers 7 auf die gleiche Karte geschrieben wird, von der die unverschlüsselte Information mittels des Kartenlesers 6 gelesen wurde.

Fig. 2 stellt in beispielhafter Ausführung das Prüfgerät für abgesicherte Ausweiskarten dar. In diesem Prüfgerät sind keinerlei geheime Elemente enthalten, so daß es gegen einen Zugriff nicht geschützt werden muß. Der Prüfrechner 11 besteht aus einem Algorithmusrechner 12 und einem Vergleicher 13, der als Ausgang eine Ja/Nein-Aussage 17 liefert. Zum Prüfrechner 11 gehört ein Kartenlesegerät 14, das Kartenleser 15 und 16 aufweist. Mit dem Kartenleser 15 wird die gleiche Information K gelesen wie vom Kartenleser 6 aus Fig. 1, während der Kartenleser 16 die Information liest, die der Kartenschreiber 7 auf der Karte eingetragen hat. Sind diese beiden Informationen in der gleichen physikalischen Weise und an einander zugeordneten geometrischen Stellen der Karte realisiert, können die Kartenleser 15 und 16 auch zu einem gemeinsamen Leser verschmolzen werden.

Die beschriebene Einrichtung arbeitet folgendermaßen: Die Karte wird in das Lesegerät 14 eingeführt. Es werden nacheinander die unverschlüsselte Information K und danach die vom Codierrechner 1 erzeugte Information gelesen. Die letztgenannte Information durchläuft den Algorithmusrechner 12.

Hierbei wird zunächst vom Leser 16 der vom Kartenschreiber 7 in die Karte eingetragene Schlüssel A gelesen. Diesen Schlüssel A verwendet der Algorithmusrechner 12 bei der Entschlüsselung der vom Kartenschreiber 7 eingetragenen verschlüsselten Information C. Das Ergebnis ist die unverschlüsselte Information K nach folgender Gleichung:

$$K = A (C) \qquad (4)$$

die mit der direkt gelesenen unverschlüsselten Information K im Vergleicher 13 verglichen wird. Der Vergleicher 13 gibt bei Übereinstimmung der beiden Informationen ein Ja-, bei Nicht-Übereinstimmung ein Nein-Signal 17 ab.

Man kann in der Dokumentensicherungs-Einrichtung nach Fig. 1 Leerdokumente verwenden, die nicht personalisiert sind, also noch keine Daten des zukünftigen Inhabers tragen, dagegen aber, wie es z. B. bei Reisepässen üblich ist, laufend numeriert sind. Derartige Dokumente sind insoweit gegen Fälschung geschützt, als es dem Fälscher nur möglich ist, von einem ihm zur Verfügung stehenden Leerdokument exakte Duplikate herzustellen. Er ist aber ohne den Schlüssel B nicht in der Lage, Fälschungen mit abweichenden Paßnummern anzufertigen.

Zugleich ist bei den echten Dokumenten die laufende Numerierung gegen Abänderung geschützt. Jede Abänderung der unverschlüsselten Paßnummer wie auch der verschlüsselten Paßnummer wird von der Dokumentenprüfeinrichtung nach Fig. 2 erkannt.

Führt man der Dokumentensicherungs-Einrichtung nach Fig. 1 dagegen personalisierte Ausweise zu, also solche, die Informationen über den rechtmäßigen Inhaber enthalten, so werden diese Informationen ebenfalls dem Verschlüsselungsverfahren unterworfen.

Sie können hierzu in einer zugleich visuell und automatisch lesbaren Schrift wie OCR oder MICR eingetragen sein. Es können auch neben der visuell lesbaren Schrift dieselben Informationen in codierter Form eingetragen sein, z. B. auf dem Magnetstreifen eines Ausweises. Schließlich können die zu schützenden Informationen in einer bildlichen Darstellung oder einem Foto bestehen, wozu zweckmäßigerweise ein weiter unten beschriebenes Verfahren verwendet wird.

Die verschlüsselte Information einschließlich des Schlüssels A wird von dem Kartenschreiber 7 auf dem gleichen Dokument entweder nach dem gleichen oder einem abweichenden physikalischen Verfahren wie die unverschlüsselte Information dargestellt. Besonders einfache Geräte ergeben sich, wenn die unverschlüsselte Information und die verschlüsselte Information beide auf Magnetstreifen des Dokumentes, evtl. sogar in der gleichen Spur, eingetragen werden. Das ist natürlich nicht möglich, wenn zur unverschlüsselten Information etwa die Unterschrift oder das Foto des rechtmäßigen Karteninhabers gehören.

Bei der Prüfung abgesicherter, personalisierter Ausweise arbeitet die Dokumenten-Prüfeinrichtung nach Fig. 2 genauso, wie zuvor beschrieben. Ein Ja-Signal der Dokumenten-Prüfeinrichtung nach Fig. 2 ergibt sich nur dann, wenn weder die unverschlüsselte noch die verschlüsselte Information geändert wurden.

Bisher wurde vorausgesetzt, daß der vom Schlüsselgenerator 4 erzeugte Schlüssel A in Klartext auf dem Dokument eingetragen wurde und bei der Prüfung in der Dokumenten-Prüfeinrichtung nach Fig. 2 abgelesen und im Algorithmusrechner 12 verwendet wurde.

Zur Vereinfachung des Verfahrens ist es möglich, für eine bestimmte Klasse von Ausweisen, z. B. für die Paßkarten eines Landes, die Herstellung der Schlüssel A und B nur einmal vorzunehmen und den Schlüssel A unveränderlich in allen Dokumentations-Prüfeinrichtungen nach Fig. 2 einzubauen. In diesem Falle kann der Zufallsgenerator 3 entfallen; die nur einmal benötigte Zufallszahl X kann auf andere Weise hergestellt werden.

Zwischen den beiden Extremen, nur ein Paar von Schlüsseln A und B zu verwenden bzw. für jede Karte ein neues Paar von Schlüsseln A und B zu generieren, liegt die Verfahrensvariante, eine begrenzte Anzahl von solchen Schlüsselpaaren herzustellen und als Liste im Codierrechner 1 aufzubewahren. In diesem Falle wird im Codierrechner 1 sowohl auf den Zufallsgenerator als auch auf den Schlüsselgenerator verzichtet. Es muß nur dafür gesorgt werden, daß bei der Erzeugung der Schlüsselpaare A und B und bei ihrer Einbringung in den gegen Zugriff geschützten Codierrechner 1 die Geheimhaltung gewahrt wird. Mit bekannten Mitteln ist es möglich, eine begrenzte Anzahl solcher Schlüsselpaare in einem Speicher des Codierrechners 1 zu speichern, ohne daß sie den dabei beschäftigten Personen angezeigt oder gar ausgedruckt werden.

Das für eine Absicherung notwendige Schlüsselpaar muß aufgrund der mit dem Kartenleser 6 vom Dokument abgelesenen unverschlüsselten Information mit seiner Listen-Nummer abgerufen werden. Brauchbare Teile der unverschlüsselten Information zur Bildung der Listen-Nummer sind z. B. die Paßnummer, das Geburtsdatum, bestimmte Buchstaben des Namens usw.

In der Dokumenten-Prüfeinrichtung nach Fig. 2 ist für diese Variante eine entsprechende Liste der Schlüssel A vorhanden, die mit den gleichen Nummern versehen ist wie die Liste der Schlüsselpaare in der Dokumentensicherungs-Einrichtung nach Fig. 1. Auch hier wird die Listen-Nummer des richtigen Schlüssels A aus der Information abgeleitet, die der Leser 15 als unverschlüsselte Information auf dem Dokument findet.

Dokumente, die in der beschriebenen Weise gesichert werden, sind zusätzlich zu dem oben beschriebenen Schutz auch gegen jede Verfälschung der zur Personalisierung eingetragenen Information gesichert. Es ist mit der Dokumenten-Prüfeinrichtung nach Fig. 2 möglich, festzustellen, ob die für die visuelle Kontrolle dienende Information abgeändert wurde, insoweit diese Information in die abzusichernde Information mit einbezogen wurde.

Enthält das Dokument die den rechtmäßigen Inhaber betreffende Information in unverschlüsselter und in verschlüsselter Form auf einem Magnetstreifen, so kann die unverschlüsselte Form nach Kontrolle durch die Dokumenten-Prüfeinrichtung nach Fig. 2 getrennt abgespeichert und später z. B. in einem Zentral-Rechner der Behörde verarbeitet werden.

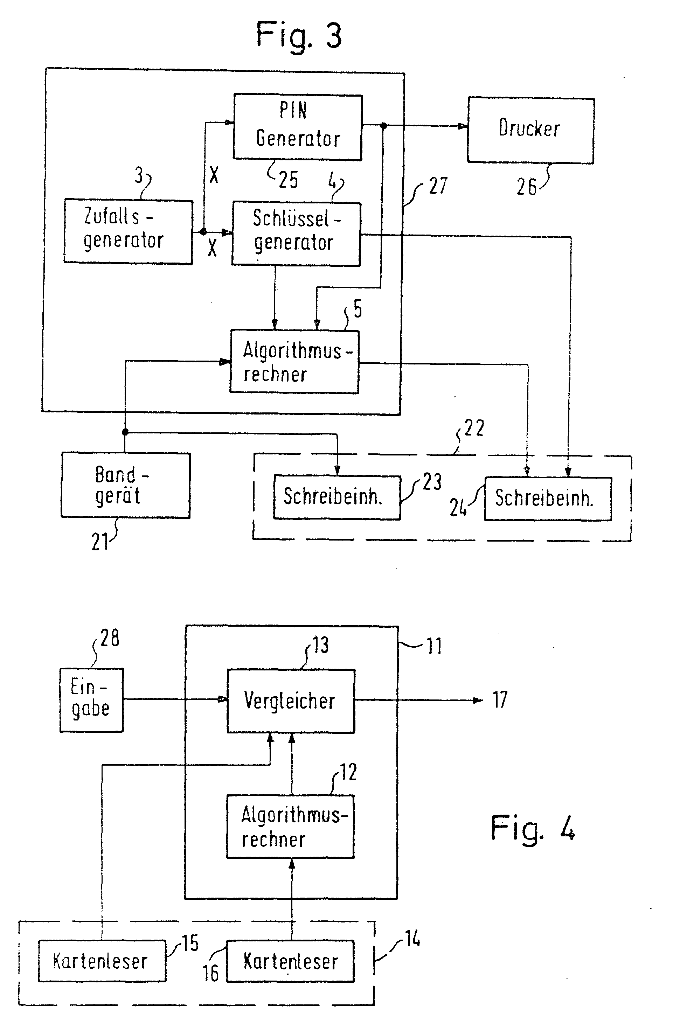

In Fig. 3 ist eine Dokumentensicherungs-Einrichtung schematisch dargestellt, mit der Leerdokumente nicht nur gesichert, sondern auch automatisch personalisiert werden. Außerdem soll anhand der Fig. 3 die Möglichkeit, das Dokument gegen Verlust zu sichern, beschrieben werden. Diese letztere Möglichkeit läßt sich ohne weiteres auch auf die Dokumentensicherungs-Einrichtung nach Fig. 1 übertragen. Als praktische Anwendung wird wiederum die Herstellung von Paßkarten angenommen.

Der Codierrechner 27 ist ähnlich aufgebaut wie der Codierrechner nach Fig. 1. Zur Einspeisung der zu verschlüsselnden Daten dient in diesem Fall aber ein Datenträgerleser, vorzugsweise in Form eines Bandgerätes 21, in das die z. B. dezentral vorbereiteten Bänder mit den Personalisierungsdaten der zukünftigen Paßinhaber eingelegt werden. Die gleichen Daten werden einem Schreibgerät 22 zugeführt, das mit seiner Schreibeinheit 23 auf Leerformulare die Personalisierungsdaten in Klarschrift, z. B. visuell und maschinell lesbar, einträgt. Zugleich werden die vom Codierrechner abgegebenen Daten über eine weitere Schreibeinheit 24 des Bandgerätes 22 auf dem gleichen Dokument in maschinell lesbarer Schrift eingetragen.

Der Codierrechner 27 enthält außer den genannten Geräten noch einen Generator für die persönliche Identifikationsnummer (PIN). Diesem PIN-Generator 25 wird die vom Zufallsgenerator 3 erzeugte Zufallszahl X ebenfalls zugeführt, die er in eine z. B. vierstellige PIN verwandelt. Diese vierstellige PIN wird im Algorithmusrechner 5 zusätzlich zu der mittels des Bandgerätes 21 vom Magnetband abgelesenen unverschlüsselten Information eingespeist, verschlüsselt und von der Schreibeinheit 24 zusätzlich auf dem Dokument niedergeschrieben.

Gleichzeitig wird die PIN über einen Drucker 26 z. B. auf einen Versand- oder Ausgabeumschlag gedruckt, in dem die mit dem Schreibgerät 22 personalisierte Karte automatisch und synchron eingelegt wird. Es ist auch möglich, den späteren Benutzer der Karte die PIN selbst auswählen zu lassen und sie in das vom Bandgerät 21 zu lesende Magnetband mit aufzunehmen. In diesem Fall entfällt in der Einrichtung nach Fig. 3 der PIN-Generator 25.

Zur besseren Geheimhaltung ist es auch möglich, mit dem Drucker 26 einen Begleitzettel herzustellen, auf dem die PIN vermerkt ist. Der Begleitzettel wird seinerseits in einen mit einem nicht eingezeichneten Drucker nach den Angaben des Bandgerätes 21 beschrifteten adressierten Umschlag eingelegt und dem zukünftigen Inhaber des Dokumentes unabhängig vom Dokument zugestellt.

Fig. 4 zeigt die entsprechend erweiterte Dokumenten-Prüfeinrichtung. Sie enthält außer den bereits in Fig. 2 dargestellten Teilen noch ein Eingabegerät 28, vorzugsweise in Form einer Tastatur, in die der Inhaber des Dokumentes aus dem Gedächtnis seine PIN eintastet. Der Vergleicher 13 übernimmt zusätzlich zu den bereits beschriebenen Aufgaben den Vergleich der eingetasteten PIN mit der über den Algorithmusrechner 12 entschlüsselten PIN und gibt sein Ja-Signal nur dann ab, wenn beide Vergleiche stimmen.

In neuerer Zeit sind Einrichtungen bekanntgeworden, mit denen bestimmte Worte, von verschiedenen Menschen ausgesprochen, automatisch erkannt und zur weiteren Verarbeitung in datenverarbeitende Einrichtungen weitergegeben werden. So gibt es insbesondere Einrichtungen, die Ziffern aufnehmen und in Rechner eingeben, so daß eine Tastatur zur Eingabe vermieden werden kann. Derartige Einrichtungen sind bisher noch nicht im großen Umfange eingeführt, weil von ihnen gefordert wird, daß sie Worte gesprochen von vielen verschiedenen Personen erkennen, wodurch die Erkennungssicherheit nur mit relativ großem Aufwand zu erzielen ist.

Weiterhin sind Einrichtungen unter dem Stichwort »voice-print« bekanntgeworden. Diese Einrichtungen gestatten es, eine Person, die eine begrenzte Anzahl Worte spricht, zu identifizieren, und unter vielen anderen Personen eindeutig zu unterscheiden.

Das im folgenden beschriebene Verfahren stellt eine Ergänzung zu oder einen Ersatz für die PIN durch ein gesprochenes Wort dar. Es vermeidet gleichzeitig die Schwierigkeiten der beiden obengenannten Ausgangsverfahren.

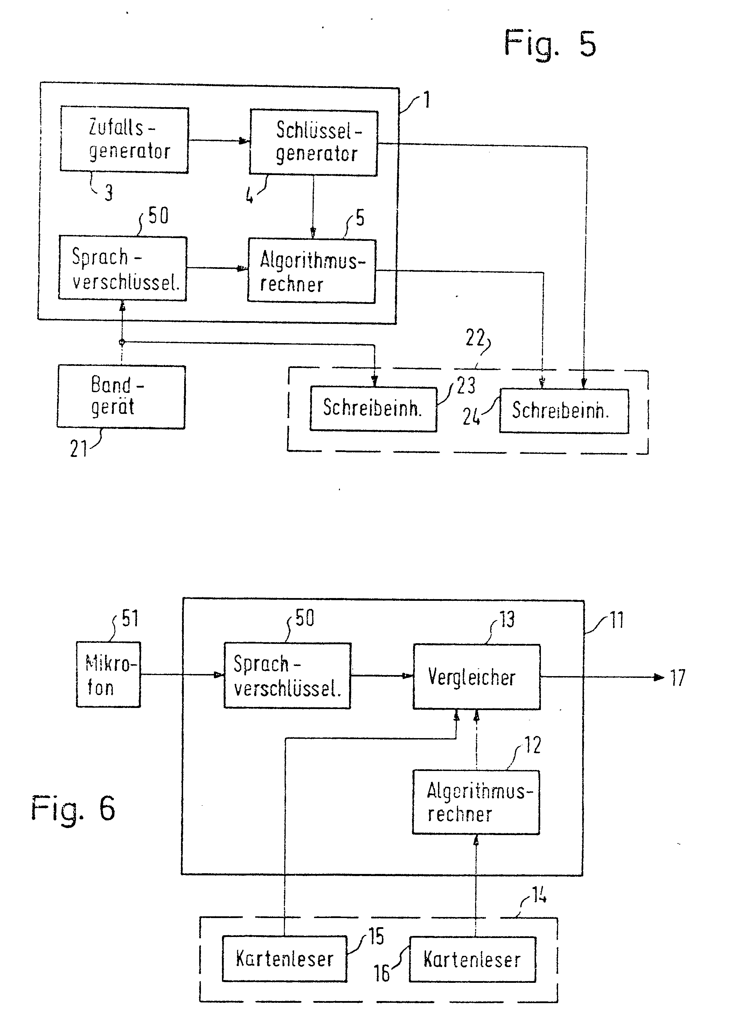

Die in Fig. 5 dargestellte Dokumentensicherungs-Einrichtung hat mit der in Fig. 3 dargestellten Einrichtung große Ähnlichkeit. Zum Unterschied gegenüber dem anhand der Fig. 3 beschriebenen Verfahren wird aber hier vorausgesetzt, daß das in das Bandgerät 21 eingelegte Band nicht nur in digitaler Form die Personalisierungsdaten enthält, sondern darüber hinaus ein während der dezentralen Herstellung des Bandes vom zukünftigen Inhaber des Ausweisdokumentes gesprochenes Codewort.

Die meisten in der Dokumentensicherungs-Einrichtung nach Fig. 5 sich abspielenden Vorgänge entsprechen denen, die anhand der Fig. 3 erklärt wurden. Es ist lediglich auf dem Weg von dem Bandgerät 21 zum Algorithmusrechner 5 ein zusätzliches Sprachverschlüsselungsgerät 50 angeordnet, das die digitale Information vom Band ungehindert in den Algorithmusrechner 5 einfließen läßt, die im Band enthaltene Sprachinformation, also das gesprochene Codewort, jedoch in eine digitale Information umwandelt, die dann, wie bereits beschrieben, verschlüsselt und verarbeitet wird.

Das Sprachverschlüsselungsgerät 50 kann in bekannter Weise aufgebaut werden. Es kann aus der Technik der Worterkennungsgeräte und der der »voice-print«-Technik eine Reihe von Methoden und Elementen entnehmen, ohne jedoch den besonderen Schwierigkeiten dieser beiden Techniken gerecht werden zu müssen.

Auf diese Weise wandelt das Sprachverschlüsselungsgerät nicht nur die klanglichen Eigenschaften eines bestimmten Wortes, sondern zusätzlich auch die klanglichen Besonderheiten der Stimme des rechtmäßigen Inhabers des Dokumentes in digitale Form um, die dann verschlüsselt wird.

In Fig. 6 ist das der Fig. 4 entsprechende Dokumentenkontrollgerät dargestellt. Es unterscheidet sich von diesem nur dadurch, daß die Eingabevorrichtung 28 durch ein Mikrofon 51 und das bereits beschriebene Sprachverschlüsselungsgerät 50 ersetzt ist. Bei der Benutzung hat der Teilnehmer das Codewort in das Mikrofon 51 zu sprechen. Diese analoge Information wird vom Sprachverschlüsselungsgerät 50 digitalisiert und genauso wie die PIN in dem anhand der Fig. 4 beschriebenen System mit der entsprechend entschlüsselten Information des Dokumentes verglichen.

Es wurde oben bereits darauf hingewiesen, daß bildliche Darstellungen, wie Fotos, Unterschriften oder Fingerabdrücke, in das Verfahren einbezogen werden können, um sie gegen Veränderungen abzusichern, die bei der für diese bildlichen Darstellungen erforderlichen visuellen Kontrolle übersehen werden könnten. Für eine derartige Absicherung ist eine eindeutige Digitalisierung der bildlichen Darstellung notwendig, da gerade gute Verschlüsselungsverfahren bekannterweise bei kleinen Veränderungen am Klartext K zu großen Änderungen an der chiffrierten Information C führen, die eine Entschlüsselung später unmöglich machen. Für Unterschriften und Fingerabdrücke liegen bereits Abtast- und Digitalisierungsverfahren vor, die diesen Ansprüchen genügen.

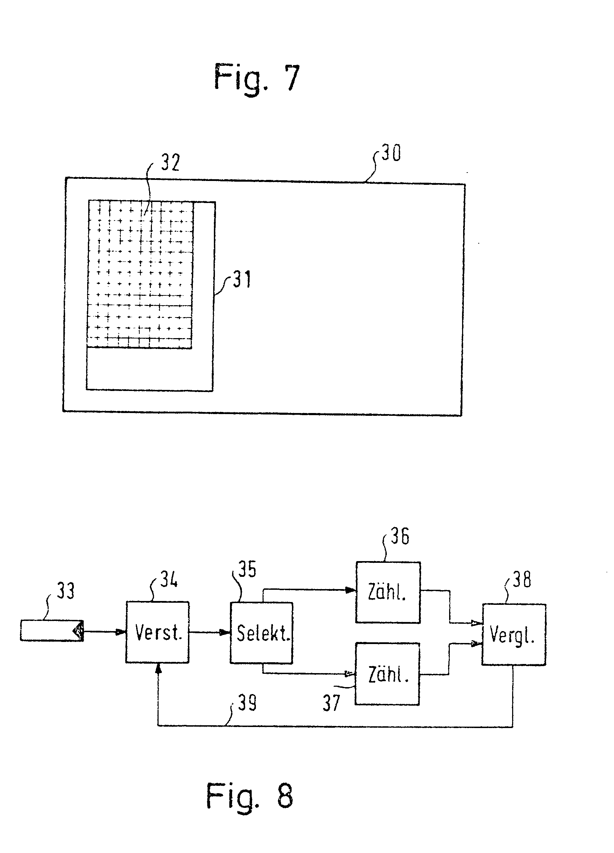

Von besonderer Bedeutung für die visuelle Kontrolle z. B. von Paßkarten ist das Foto des rechtmäßigen Inhabers. Das im folgenden beschriebene Verfahren dient ebenso wie ähnliche Verfahren zur Abtastung der Unterschrift oder des Fingerabdrucks in der Hauptsache dazu, die Unversehrtheit dieser für die visuelle Kontrolle erforderlichen Elemente des Dokumentes durch eine automatische Kontrolle abzusichern. Ein für die Digitalisierung derartiger Fotos besonders geeignetes Verfahren sei anhand der schematischen Darstellung nach Fig. 7 beschrieben. Die Paßkarte 30 trägt ein Foto 31, von dem nur vorausgesetzt wird, daß es eine bestimmte Minimalgröße in beiden Ausdehnungen nicht unterschreitet. Auf dieses Foto wird ein gedachtes Rasterfeld 32 gelegt, daß eine vorzugsweise quadratische Rasterteilung aufweist. Dieses gedachte Rasterfeld 32 beschreibt die Abtastfolge eines Abtastgerätes, das mit einem Abtaststrahl arbeitet, dessen Bewegung mit aus der Abtasttechnik bekannten Einrichtungen bewirkt wird.

Ebenfalls nach bekannten Methoden und mit bekannten Einrichtungen wird das gedachte Abtastfeld 32 vor der Abtastung so verschoben, daß z. B. die linke obere Ecke und die linke und die obere Kante des Abtastfeldes mit der linken oberen Ecke und den entsprechenden Kanten des Fotos 31 übereinstimmen.

In Fig. 8 ist in schematischer Darstellung die Verarbeitung des abgetasteten Signals, also der Helligkeitswerte der Einzelquadrate des Abtastrasters 32, dargestellt. Hierbei wird angenommen, daß für die Helligkeitsmessung der nacheinander beleuchteten Rasterelemente eine einzige lichtempfindliche Zelle vorgesehen ist, aus der die Helligkeitswerte der einzelnen Rasterelemente in serieller Form abgegeben werden.

Das im folgenden beschriebene Verfahren läßt sich aber auch auf andere Abtastordnungen — beispielsweise lineare oder flächige Diodenarrays — übertragen.

Die in Fig. 8 dargestellte Einrichtung arbeitet folgendermaßen:

Die von einem Bildrasterabtastgerät in Form eines Lichtempfängers 33 abgegebene, mit der Helligkeit der Rasterpunkte des Rasterfeldes 32 schwankenden Impulse werden einem regelbaren Verstärker 34 und anschließend einer Selektionsstufe 35 zugeführt, die entscheidet, ob der Impuls größer oder kleiner als ein fest eingestellter Wert ist. Die Impulse, die den fest eingestellten Wert überschreiten, werden in einem Zähler 36 gezählt. Impulse, die den Wert unterschreiten, werden in einem Zähler 37 gezählt. Jeweils nach vollständiger Abtastung des gesamten Rasters werden die Zählerstände der Zähler 36 und 37 in einem Vergleicher 38 miteinander verglichen. Falls sie nicht ein vorgeschriebenes Verhältnis (z. B. 1 : 1) besitzen, wird über eine Regelleitung 39 der regelbare Verstärker 34 nachgestellt.

Diese Prozedur wird so lange wiederholt, bis das vorgegebene Verhältnis der Zählerstände in den Zählern 36 und 37 erreicht ist. Damit ist gesichert, daß der durch das Rasterfeld 32 überdeckte Teil des Fotos 31 in ein Bit-Muster verwandelt ist, das einen vorgeschriebenen Anteil an »hellen« Rasterpunkten und entsprechend einen vorgeschriebenen Anteil an »dunklen« Rasterpunkten enthält. Dieses Bit-Muster wird als die dem Foto zugeordnete Information abgespeichert und dem beschriebenen Verschlüsselungsverfahren unterworfen.

In Fig. 8 sind alle für den Gleichlauf von Abtastung und Zählung notwendigen Elemente nicht dargestellt worden, da sie zum bekannten Stand der Technik gehören.

**Patentansprüche**

1. Verfahren zur Erzeugung und späteren Kontrolle von gegen Nachahmung, Verfälschung und Mißbrauch abgesicherten Dokumenten, bei dem bei dessen Erstellung auf dem abzusichernden Dokument eine unverschlüsselte Klarinformation (K) maschinenlesbar eingetragen wird, aus der unverschlüsselten Klarinformation unter Verwendung eines geheimgehaltenen Algorithmus oder eines diesem zugeordneten geheimen Schlüssels (B) eine verschlüsselte Information (C) abgeleitet wird, die ebenfalls maschinenlesbar auf dem abzusichernden Dokument eingetragen wird, und bei dessen Kontrolle eine der beiden auf dem Dokument befindlichen Informationen über einen Algorithmus oder diesem zugeordneten Schlüssel verändert und mit der anderen Information verglichen wird, und das Vergleichsergebnis die Gültigkeit des Dokuments kenntlich macht, gekennzeichnet durch die Verwendung eines über eine »trap-door«-Funktion verbundenen Schlüssel- oder Algorithmuspaares bestehend aus einem geheimhaltungsbedürftigen Schlüssel (B) und einem nichtgeheimhaltungsbedürftigen Schlüssel (A), wobei

– bei der Erstellung des Dokuments der geheimhaltungsbedürftige Schlüssel bzw. Algorithmus (B) zur Verschlüsselung der Information und

– bei der Kontrolle des Dokuments der nichtgeheimhaltungsbedürftige Schlüssel bzw. Algorithmus (A) zur Entschlüsselung der verschlüsselten Information (C) eingesetzt wird und die so gewonnene Information (K') mit der auf dem Dokument befindlichen unverschlüsselten Information (K) verglichen wird.

2. Verfahren nach Anspruch 1, dadurch gekennzeichnet, daß bei der Erstellung des abgesicherten Dokuments eine im voraus auf das noch ungesicherte Dokument unverschlüsselt aufgebrachte Information (K) maschinell ausgelesen, verschlüsselt und zusammen mit dem nichtgeheimhaltungsbedürftigen Schlüssel (A) des bei der späteren Kontrolle des Dokuments zu verwendenden Algorithmus auf dem Dokument eingetragen wird.

3. Verfahren nach Anspruch 2, dadurch gekennzeichnet, daß bei der Erstellung für jedes Dokument in Abhängigkeit von einer Zufallszahl (X) ein Paar von Schlüsseln (A, B) erzeugt wird, von denen der geheimhaltungsbedürftige ein Schlüssel (B) zum Verschlüsseln der unverschlüsselt eingetragenen Information (K) und der nichtgeheimhaltungsbedürftige andere Schlüssel (A) bei der Kontrolle des Dokuments zum Entschlüsseln der verschlüsselt eingetragenen Information (C) verwendet wird.

4. Verfahren nach Anspruch 1, dadurch gekennzeichnet, daß eine vorbestimmte Folge von Schlüsselpaaren $(A_i, B_i)$ vorgesehen wird, daß für die Erstellung des abgesicherten Dokuments eine im voraus auf das noch ungesicherte Dokument unverschlüsselt aufgebrachte Information maschinell ausgelesen und zum Eintragen auf dem Dokument unter Verwendung des geheimhaltungsbedürftigen einen (B) der beiden Schlüssel eines Schlüsselpaares (A, B) verschlüsselt wird, das aus der Folge von Schlüsselpaaren $(A_i, B_i)$ in Abhängigkeit von der unverschlüsselten Information (K) selbsttätig ausgewählt wird, sowie daß bei der Kontrolle aus der Folge der nichtgeheimhaltungsbedürftigen Schlüssel $(A_i)$ der Schlüssel (A) des bei der Verschlüsselung verwendeten Schlüsselpaares (A, B) in Abhängigkeit von der unverschlüsselt eingetragenen Information (K) selbsttätig ausgewählt wird und anhand dieses Schlüssels (A) die verschlüsselt eingetragene Information (C) entschlüsselt wird.

5. Verfahren nach Anspruch 1, dadurch gekennzeichnet, daß bei der Erstellung des abgesicherten Dokuments eine im voraus auf das noch ungesicherte Dokument unverschlüsselt aufgebrachte Information (K) maschinell ausgelesen, unter Verwendung eines fest vorgegebenen geheimhaltungsbedürftigen Schlüssels (B) verschlüsselt und auf dem Dokument eingetragen wird, sowie daß bei der Kontrolle des Dokuments der gleichfalls fest vorgegebene zugehörige, nichtgeheimhaltungsbedürftige Schlüssel (A) für das Entschlüsseln der verschlüsselt eingetragenen Information (C) verwendet wird.

6. Verfahren nach einem der vorhergehenden Ansprüche, dadurch gekennzeichnet, daß in die Verschlüsselung zur Personalisierung des Dokuments eingetragene Informationen einbezogen werden.

7. Verfahren nach Anspruch 6, dadurch gekennzeichnet, daß bei der Erstellung des Dokuments eine Identifikationsnummer auf dem Dokument verschlüsselt aufgezeichnet sowie bei der Kontrolle die aus dem Dokument maschinell ausgelesene und entschlüsselte Identifikationsnummer mit einer vom Benutzer des Dokuments unverschlüsselt einzugebenden Identifikationsnummer verglichen wird.

8. Verfahren nach Anspruch 6, dadurch gekennzeichnet, daß bei der Erstellung des Dokuments ein vom Benutzer des Dokuments gesprochenes Codewort oder dergleichen in eine digitale Form umgewandelt und auf dem Dokument verschlüsselt aufgezeichnet wird, sowie daß bei der Kontrolle des Dokuments die aus dem Dokument maschinell ausgelesenen und entschlüsselten Codewortsignale mit Signalen verglichen werden, die durch Digitalisieren des vom Benutzer des Dokuments zu Kontrollzwecken gesprochenen Codeworts gewonnen werden.

9. Verfahren nach Anspruch 6, dadurch gekennzeichnet, daß bei der Erstellung des Dokuments aus einer auf dem Dokument aufgebrachten, den Benutzer identifizierenden bildlichen Darstellung digitale Signale abgeleitet und auf dem Dokument verschlüsselt aufgezeichnet werden, und daß bei der Kontrolle des Dokuments diese Bildsignale aus dem Dokument maschinell ausgelesen und entschlüsselt sowie mit Bildsignalen verglichen werden, die für die Kontrolle aus der bildlichen Darstellung selbst abgeleitet werden.

10. Verfahren nach Anspruch 9, dadurch gekennzeichnet, daß die bildliche Darstellung innerhalb eines gedachten Rasterfeldes abgetastet wird, das mit der bildlichen Darstellung eine Ecke und zwei Kanten gemeinsam hat, und daß die Helligkeitswerte der einzelnen Rasterpunkte so gewichtet werden, daß ein vorgeschriebenes Verhältnis der Anzahlen von als hell bzw. als dunkel gewerteten Rasterpunkten entsteht.

11. Einrichtung zur Erzeugung von abgesicherten Dokumenten gemäß dem Verfahren nach einem der vorhergehenden Ansprüche, gekennzeichnet durch einen Schlüsselzahlgeber (3, 4) für mindestens ein Paar von über eine »trapdoor«-Funktion verbundenen Schlüsselzahlen (A, B), einen Dokumentenleser (6) zum maschinellen Lesen von unverschlüsselten Klarinformationen (K) auf dem Dokument, einen Algorithmusrechner (5) zur Verschlüsselung der auf dem Dokument gelesenen Information (K) mit der geheimgehaltenen Schlüsselzahl (B) und einem Dokumentenschreiber (7) zum Eintragen der für die Entschlüsselung notwendigen nichtgeheimhaltungsbedürftigen Schlüsselzahl (A) und der verschlüsselten Information (C) auf dem Dokument.

12. Einrichtung zur Kontrolle von abgesicherten Dokumenten gemäß dem Verfahren nach einem der Ansprüche 1 bis 10, gekennzeichnet durch einen Dokumentenleser (15) zum maschinellen Lesen der unverschlüsselten Information (K), einen Dokumentenleser (16) zum maschinellen Lesen der zur Entschlüsselung notwendigen, nichtgeheimhaltungsbedürftigen Schlüsselzahl (A) und der verschlüsselten Information (C), einen Algorithmusrechner (12) zur Entschlüsselung der verschiedenen Information (C) unter Verwendung der gelesenen nichtgeheimhaltungsbedürftigen Schlüsselzahl (A) und einen Vergleicher (13) für die gelesene unverschlüsselte und die so gewonnene entschlüsselte Information (K bzw. K').

13. Einrichtung nach Anspruch 11, dadurch gekennzeichnet, daß der Schlüsselzahlgeber (3, 4) einen Schlüsselgenerator (4) zur Erzeugung von Paaren von Schlüsselzahlen (A, B) aufweist.

14. Einrichtung nach Anspruch 13, dadurch gekennzeichnet, daß dem Schlüsselgenerator (4) ein Zufallszahlen liefernder Zufallsgenerator (3) vorgeschaltet ist.

15. Einrichtung nach einem der Ansprüche 11, 13 oder 14, gekennzeichnet durch einen Datenträgerleser (21) für Personalisierungsdaten und ein Schreibgerät (22), mittels dessen die aus den Personalisierungsdaten abgeleiteten unverschlüsselten und verschlüsselten Informationen auf einem Leerformular eintragbar sind.

16. Einrichtung nach einem der Ansprüche 11 oder 13 bis 15, gekennzeichnet durch einen Generator (25) für persönliche Identifikationsnummern, der an den Algorithmusrechner (5) zwecks Verschlüsselung der erzeugten persönlichen Identifikationsnummer zur Eintragung auf dem Dokument angeschlossen ist.

17. Einrichtung nach einem der Ansprüche 11 oder 13 bis 16, gekennzeichnet durch ein Sprachverschlüsselungsgerät (50) zur Digitalisierung eines auf einem Datenträger enthaltenen gesprochenen Textes, der über den Algorithmusrechner (5) in verschlüsselter Form auf dem Dokument eintragbar ist.

18. Einrichtung nach einem der Ansprüche 11 oder 13 bis 17, gekennzeichnet durch ein dem Algorithmusrechner (5) vorgeschaltetes Bildrasterabtastgerät (33, 34, 35) zur Digitalisierung eines auf dem Dokument angebrachten Bildes.

19. Einrichtung nach Anspruch 12, gekennzeichnet durch eine dem Vergleicher (13) vorgeschaltete Eingabevorrichtung (28) zur Eingabe einer persönlichen Identifikationsnummer.

20. Einrichtung nach Anspruch 12 oder 19, gekennzeichnet durch ein Mikrofon (51) und ein dem Mikrofon nachgeschaltetes, mit einem Eingang des Vergleichers (13) verbundenes Sprachverschlüsselungsgerät (50) zur Digitalisierung der mittels des Mikrofons aufgenommenen Sprachsignale.

21. Einrichtung nach Anspruch 12, dadurch gekennzeichnet, daß dem Vergleicher (13) ein Bildrasterabtastgerät zur Digitalisierung eines auf dem Dokument vorgesehenen Bildes vorgeschaltet ist.

## Claims

1. A method for the production and subsequent checking of documents to be protected against imitation, falsification and misuse, in which for the production, an uncoded plain information (K) is recorded in machine readable form on the document to be protected, from the uncoded plain information a coded information (C) is derived using an algorithm to be kept secret or a corresponding secret code (B), which coded information is likewise recorded on the document to be protected in machine readable form, and for the checking one of the two sets of information existing on the document is altered through an algorithm or a corresponding code and compared with the other information, the comparison showing the validity of the document,
characterized by the use of a pair of codes or algorithms connected by way of a »trap-door« function comprising a code (B) requiring to be kept secret and a code (A) not requiring to be kept secret, whereby

— during the production of the document the algorithm (B) requiring to be kept secret is used for the encoding of the information, and
— during the checking of the document the code or algorithm (A) not requiring to be kept secret is used for the decoding of the encoded information (C) and the information (K') so obtained is compared with the uncoded information (K) existing on the document.

2. A process according to Claim 1, characterized in that during the production of the document to be protected, uncoded information (K) provided beforehand on the yet unprotected document is read by machine, encoded, and recorded on the document together with the code (A) of the algorithm to be used for the subsequent checking of the document.

3. A process according to Claim 2, characterized in that during the production a pair of codes (A, B) is produced for each document in dependence upon a random number (X), of which pair the one code (B) requiring to be kept secret is to be used for the encoding of the uncoded recorded information (K) and the other code (A) not requiring to be kept secret is to be used during the checking of the document for the decoding of the encoded recorded information (C).

4. A process according to Claim 1, characterized in that a predetermined series of code pairs $(A_i, B_i)$ is provided, that for the production of the document to be protected an uncoded information provided in advance on the yet unprotected document is read by machine and is encoded for recordal on the document using the one (B) to be kept secret of the two codes of a code pair (A, B) that is automatically selected from the series of code pairs $(A_i, B_i)$ in dependence upon the uncoded information (K), and that during the checking the code (A) of the code pair (A, B) used during the encoding is automatically selected from the series of codes $(A_i)$ not requiring to be kept secret, in dependence upon the uncoded recorded information (K), and the encoded recorded information (C) is decoded with the aid of this code (A).

5. A process according to Claim 1, characterized in that during the production of the document to be protected an uncoded information (K) provided in advance on the yet unprotected document is read by machine, encoded, using a fixed predetermined code (B) to be kept secret, and recorded on the document, and that during checking of the document the likewise fixed and predetermined corresponding code (A) not requiring to be kept secret is used for the decoding of the encoded recorded information (C).

6. A process according to one of the preceding claims charaterized in that, in the encording, information recorded for the personalization of the document is included.

7. A process according to Claim 6 characterized in that during the production of the document an identification number is indicated in code on the document and that during the checking the identification number read from the document by machine and decoded is compared with an uncoded identification number to be provided by the user of the document.

8. A process according to Claim 6, characterized in that during the production of the document a code word or the like to be spoken by the user is transformed into digital form and indicated in code on the document, and that for the checking of the document the code word signal read from the document by machine and decoded is compared with signals which are obtained through digitalizing the code word spoken by the user of the document for the purpose of checking.

9. A process according to Claim 6, characterized in that during the production of the document digital signals are derived from a pictorial representation identifying the user and provided on the document and are indicated in code on the document, and that during the checking of the document these picture signals are read from the document by machine, decoded and compared with picture signals which, for the checking, are derived from the pictorial representation itself.

10. A process according to Claim 9, characterized in that the pictorial representation is sampled within a determined raster field which has one corner and two edges in common with the pictorial representation, and that the lightness values of individual raster points are so evaluated that there is formed a prescribed relationship of the numbers of raster points evaluated as light or dark respectively.

11. An arrangement for the production of protected documents according to the process of one of the preceding claims, characterized by a code numer generator (3, 4) for at least one pair of code numbers (A, B) connected via a »trapdoor« function, a document reader (6) for the machine reading of unencoded plain information (K) on the document, an algorithm computer (5) for the encoding of the information (K) read from the document by means of the code number (B) to be kept secret and a document inscriber (7) for the recordal on the document of the code number (A) not required to be kept secret and necessary for the decoding and of the encoded information (C).

12. A device for the checking of protected documents according to the process of one of the claims 1—10, characterized by a document reader (15) for the machine reading of the unencoded information (K), a document reader (16) for the machine reading of the code number (A) not required to be kept secret and necessary for the decoding, and of the encoded information (C), an algorithm computer (12) for the decoding of the encoded information (C) using the read code number (A) not required to be kept secret and a comparator (13) for the read unencoded information and the decoded information so obtained (K, K') respectively.

13. A device according to Claim 11, characterized in that the code numer generator (3, 4) comprises a code generator (4) for the production of pairs of code numbers (A, B).

14. A device according to Claim 13, characterized in that a random number generator (3) is connected in front of the code generator (4).

15. A device according to one of Claims 11, 13 or 14, characterized by a data carrier reader (21) for personalizing data and a writing apparatus (22) by means of which the unencoded and encoded information derived from the personalizing data are transcribable onto a blank form.

16. A device according to one of Claims 11 or 3—15, characterized by a generator (25) for personal identification numbers, which is connected to an algorithm computer (15) for the purpose of encoding the generated personal identification numbers for entry on the document.

17. A device according to one of Claims 11 or 13—16, characterized by a speech encoding apparatus (50) for the digitalization of a spoken text to be contained on a data carrier, which is recordable via the algorithm computer (5) on the document in encoded form.

18. A device according to one of Claims 11 or 13—17, characterized by a picture raster sampling apparatus (33, 34, 35) connected before the algorithm computer (5), for the digitalization of a picture provided on the document.

19. A device according to Claim 12, characterized by an input device (28) connected in front of the comparator (13) for the input of a personal identification number.

20. A device according to Claim 12 or 19, characterized by a microphone (51) and a speech encoding apparatus (50) connected after the microphone, and with the input of the comparator (13), for the digitalization of the speech signals obtained by means of the microphone.

21. A device according to Claim 12, characterized in that a picture raster sampling apparatus for the digitalization of a picture provided on the document is connected in front of the comparator (13).

## Revendications

1. Procédé pour produire et pour contrôler ultérieurement des documents protégés contre les imitations, les falsifications et les usages frauduleux, qui consiste, au moment de l'établissement du document devant être protégé, à inscrire sur celui-ci une information en clair non-codée (K) pouvant être lue par une machine, en développant, à partir de cette information en clair non-codée, en utilisant un algorithme secret ou une clé secrète (B) en relation avec celui-ci, une information codée (C) qui est également lisible au moyen d'une machine et lors du contrôle dudit document, à modifier, l'une des deux informations qui se trouvent sur le document par un algorithme, ou par une clé en relation avec celui-ci, et à le comparer avec l'autre information, en utilisant le résultat de cette comparaison comme critère de la validité du document, caractérisé en ce que l'on utilise une paire de clés ou d'algorithmes liée par une fonction »trap-door« qui se compose d'une clé (B) devant être tenue secrète et d'une clé (A) qui n'a pas besoin d'être tenue secrète, de sorte que:

— on utilise, pour établir le document, la clé ou l'algorithme devant être tenu secret pour le codage de l'information et;
— pour le contrôle du document, la clé ou l'algorithme (A) qui n'a pas besoin d'être tenu secret pour décoder l'information codée (C) et on compare l'information (K') ainsi obtenue avec l'information non-codée (K) se trouvant sur le document.

2. Procédé selon la revendication 1, caractérisé en ce que, au moment de l'établissement du document protégé, une information lisible (K) par une machine, non-codée, inscrite auparavant sur le document non-protégé, est lue, codée et est inscrite sur le document, conjointement avec la clé (A) qui n'a pas besoin d'être tenue secrète de l'algorithme appelé à être utilisé lors du contrôle ultérieur du document.

3. Procédé selon la revendication 2, caractérisé en ce que, lors de l'établissement de chaque document, on engendre, en fonction d'un nombre aléatoire (X), une paire de clés (A, B) dont celui-ci (B) devant être tenu secret est utilisé pour le codage de l'information non-codée inscrite (K), tandis que l'autre clé (A), devant être tenue secrète, est utilisée, au moment du contrôle du document, pour le décodage de l'information codée (C).

4. Procédé selon la revendication 1, caractérisé en ce qu'une suite prédéterminée de paires de clés (A$_i$, B$_i$) est prévue, en ce que, pour établir le document protégé, on lit avec une machine l'information non-codée inscrite sur le document non encore protégé et en ce que, pour l'inscrire sur le document, on procède à son codage en utilisant l'une des deux clés (B) d'une paire de clés (A, B) qui a été sélectionnée automatiquement dans la suite des paires de clés (A$_i$, B$_i$) en fonction de l'information non-codés (K) et en ce que, lors du contrôle, on sélectionne automatiquement, de la suite des clés (A$_i$) n'ayant pas besoin d'être tenues secrètes, la clé (A) de la paire de clés (A, B) utilisée pour le codage, en fonction de l'information non-codés inscrite (K) et en ce que, en utilisant cette clé (A), on décode l'information codée inscrite (C).

5. Procédé selon la revendication 1, caractérisé en ce que, lors de l'établissement du document protégé, on lit avec une machine une information non-codée (K) inscrite sur le document non-encore protégé, en utilisant une clé fixe prédéterminée, devant être tenue secrète et inscrite sur le document, et en ce que, lors du contrôle du document, on utilise également la clé coresspondante prédéterminée (A) n'ayant pas besoin d'être tenue secrète pour le décodage de l'information codée inscrite (C).

6. Procédé selon l'une quelconque des revendications précédentes, caractérisé en ce que l'on utilise dans le codage des informations inscrites pour personnaliser le document.

7. Procédé selon la revendication 6, caractérisé en ce que lors de l'établissement du document, on inscrit, sous une forme codée, sur celuici, un numéro d'identification et en ce que, lors du contrôle, on compare le numéro d'identification décodé et lu par une machine avec un numéro d'identification inscrit sous une forme non-codée sur le document par son utilisateur.

8. Procédé selon la revendication 6, caractérisé en ce que lors de l'établissement du document, on transforme un mot de code ou autre prononcé par l'utilisateur du document sous une forme digitale et on l'enregistre sous une forme codée sur le document, et en ce que, lors du contrôle du document, on compare les signaux résultant de la lecture et du décodage de ce mot de code avec les signaux obtenus en digitalisant le mot de code prononcé par l'utilisateur du document aux fins de contrôle.

9. Procédé selon la revendication 6, caractérisé en ce que lors de l'établissement du document, on développe à partir d'une représentation graphique apposée sur le document et identifiant son utilisateur, des signaux digitaux ou numériques que l'on enregistre sur le document sous une forme codée et en ce que, lors du contrôle du document, on lit ces signaux avec une machine sur le document et on les décode, puis on les compare avec les signaux graphiques qui ont été développés, aux fins de contrôle, à partir de la représentation graphique elle-même.

10. Procédé selon la revendication 9, caractérisé en ce qu'on analyse la représentation graphique dans les limites d'un quadrillage imaginaire qui a en commun avec la représentation graphique un coin et deux bords et en ce qu'on procède à la pondération des valeurs de luminosité des points individuels dudit quadrillage, de sorte que l'on obtient un rapport prédéterminé entre les nombres de points qui ont été évalués comme étant clairs et ceux considérés comme sombres dudit quadrillage.

11. Dispositif pour produire des documents protégés selon le procédé spécifié dans l'une quelconque des revendications précédentes, caractérisé en ce que par un générateur de nombres de codage (3, 4) pour, au moins, une paire de nombres-clés (A, B) liés par une fonction »trap-door«, par un lecteur de document (6) pour lire des informations en clair non-codées (K) sur le document, par un calculateur d'algorithme (5) pour le codage des informations (K) lues sur le document avec un nombre-clés (B) tenu secret et par un dispositif d'écriture (7) pour inscrire le nombre-clés qui n'a pas besoin d'être tenu secret nécessaire pour le décodage (A) et l'information codée (C) sur le document.

12. Dispositif pour contrôler des documents protégés selon le procédé spécifié dans l'une quelconque des revendications 1 à 10, caractérisé par un lecteur de document (15) pour lire mécaniquement l'information non-codée (K), d'un lecteur de documents (16) pour lire mécaniquement le nombre-clés (A) non-secret nécessaire pour le décodage et l'information codée (C), un calculateur d'algorithme (12) pour le décodage de l'information codée (C) en utilisant le nombre-clés non-secret (A) et un comparateur (13) pour comparer l'information non-codée lue et l'information décodée ainsi obtenues (K ou K').

13. Dispositif selon la revendication 11, caractérisé en ce que le générateur de nombres-clés (3, 4) comporte un générateur (4) pour engendrer des paires de nombres-clés (A, B).

14. Dispositif selon la revendication 13, caractérisé en ce que le générateur de nombres-clés (4) est précédé d'un générateur aléatoire (3) fournissant des nombres aléatoires.

15. Dispositif selon l'une quelconque des revendications 11, 13 ou 14, caractérisé pour un lecteur de supports d'informations (21) pour les données de personnalisation et par un appareil d'écriture (22) au moyen duquel les données de personnalisation développées à partir des informations codées et non-codées peuvent être inscrites sur un formulaire vierge.

16. Dispositif selon l'une quelconque des revendications 11 ou 13 à 15, caractérisé par un générateur (25) produisant les numéros d'identification personnels, qui est connecté au calculateur d'algorithme (5) aux fins de codage du numéro d'identification personnel engendré avant d'inscrire celui-ci sur le document.

17. Dispositif selon l'une quelconque des revendications 11 ou 13 à 16, caractérisé par un dispositif de codage de la parole (50) pour digitaliser un texte parlé d'un support d'informations qui, par l'intermédire du calculateur d'algorithme (5) peut être inscrit, sous une forme codée, sur le document.

18. Dispositif selon l'une quelconque des revendications 11 ou 13 à 17, caractérisé par un appareil d'analyse d'images (33, 34, 35) précédent le calculateur d'algorithme (5), afin de digitaliser une image apposée sur le document.

19. Dispositif selon la revendication 12, caractérisé par un dispositif d'entrée (28) précédent le comparateur (13) au fins d'entrée d'un numéro d'identification personnel.

20. Dispositif selon la revendication 12 ou 19, caractérisé par un microphone (51) et par un dispositif de codage de la parole (50) faisant suite à ce microphone et relié à l'une des entrées du comparateur (13) aux fins de digitalisation des signaux de parole captés par le microphone.

21. Dispositif selon la revendication 12, caractérisé en ce que le comparateur (13) et précédé d'un appareil d'analyse d'images pour le digitalisation d'une image prévue sur le document.

Fig. 1

Fig. 2

## Fig. 3

PIN Generator — 25

Drucker — 26

27

Zufalls-generator — 3

X

X

Schlüssel-generator — 4

Algorithmus-rechner — 5

Band-gerät — 21

22

Schreibeinh. — 23

24 — Schreibeinh.

## Fig. 4

Ein-gabe — 28

Vergleicher — 13

11

17

Algorithmus-rechner — 12

Kartenleser — 15

16 — Kartenleser — 14

Fig. 5

```
┌─────────────────────────────────────────────┐ ╱1
│  ┌─────────────┐         ┌─────────────┐     │
│  │ Zufalls -   │────────▶│ Schlüssel-  │─────┼─────────────────┐
│  │ generator   │         │ generator   │     │                 │
│  └─────────────┘         └─────────────┘     │                 │
│        └3                      └4    ╱5       │                 │
│  ┌─────────────┐         ┌─────────────┐     │                 │
│  │ Sprach -    │────────▶│ Algorithmus-│─────┼──────────┐      │
│  │ verschlüssel.│        │ rechner     │     │          │      │
│  └─────────────┘         └─────────────┘     │          │      │
│        ▲ 50                                  │          │      │
└────────┼─────────────────────────────────────┘          │      │
         │                                                 │      │
  ┌─────────────┐        ┌ ─ ─ ─ ─ ─ ─ ─ ─ ─ ─ ─ ─ ─ ─ ─ ─│─ ─ ─│─┐
  │ Band -      │        │ ┌─────────────┐  23  ┌──────────▼──────▼┐│
  │ gerät       │        │ │ Schreibeinh.│   24 │ Schreibeinh.     ││
  └─────────────┘        │ └─────────────┘      └──────────────────┘│
        └21              └ ─ ─ ─ ─ ─ ─ ─ ─ ─ ─ ─ ─ ─ ─ ─ ─ ─ ─ ─ ─┘
                                        22
```

Fig. 6

```
 ╱51                ┌─────────────────────────────────────────────┐ ╱11
┌──────┐            │   ╱50              ┌─────────────┐  ╱13      │
│Mikro-│───────────▶│ ┌─────────────┐    │ Vergleicher │─────────┼──▶ 17
│fon   │            │ │ Sprach -    │───▶│             │          │
└──────┘            │ │ verschlüssel.│   └─────────────┘          │
                    │ └─────────────┘          ▲  ▲               │
                    │                          │  │  ┌──────────┐ │
                    │                          │  └──│Algorithmus-│12
                    │                          │     │rechner   │ │
                    │                          │     └──────────┘ │
                    └──────────────────────────┼──────────▲───────┘
                                               │          │
                    ┌ ─ ─ ─ ─ ─ ─ ─ ─ ─ ─ ─ ─ │─ ─ ─ ─ ─ │─ ─ ┐  14
                    │ ┌─────────────┐ 15       │ ┌────────┼───┐ │
                    │ │ Kartenleser │──────────┘ │Kartenleser │ │
                    │ └─────────────┘  16        └────────────┘ │
                    └ ─ ─ ─ ─ ─ ─ ─ ─ ─ ─ ─ ─ ─ ─ ─ ─ ─ ─ ─ ─ ┘
```

19

# Fig. 7

# Fig. 8